(19) Europäisches Patentamt
European Patent Office
Office européen des brevets

(11) EP 2 138 520 B1

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(21) Anmeldenummer: **09007854.4**

(22) Anmeldetag: **16.06.2009**

(51) Int Cl.:
***C08G 18/28*** *(2006.01)* ***C08G 18/38*** *(2006.01)*
***C08G 18/66*** *(2006.01)* ***C08J 9/00*** *(2006.01)*
***C08G 18/48*** *(2006.01)* ***C08G 18/18*** *(2006.01)*
***C08K 5/20*** *(2006.01)* *C08G 101/00 (2006.01)*

(54) **Verfahren zur Erniedrigung von Emissionen eines Polyurethanschaumstoffes**

Method for reducing emissions of a polyurethane foam

Procédé de réduction d'émissions d'une mousse de polyuréthane

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.06.2008 DE 102008030763**

(43) Veröffentlichungstag der Anmeldung:
**30.12.2009 Patentblatt 2009/53**

(73) Patentinhaber: **Bayer Intellectual Property GmbH**
**40789 Monheim (DE)**

(72) Erfinder:
- **Haas, Peter, Dr.**
  **42781 Haan (DE)**
- **Jacobs, Gundolf, Dr.**
  **51503 Rösrath (DE)**
- **Meyer-Ahrens, Sven, Dr.**
  **51375 Leverkusen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**EP-A1- 1 428 847** **EP-A2- 0 358 021**
**EP-A2- 1 099 718**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 138 520 B1

Printed by Jouve, 75001 PARIS (FR)

## Beschreibung

Es ist aus dem Stand der Technik bekannt, dass Polyurethanschaumstoffe Formaldehyd emittieren können, wobei diese Formaldehydemission im allgemeinen unerwünscht ist. Nachgewiesen werden diese Emissionen z.B. bei Messungen nach der VDA 275 (Flaschenmethode, 3h 60°C) oder auch nach der VDA 276 (Emissionskammerprüfung, 65°C). Diese Formaldehydemissionen können bereits bei frisch hergestellten Schaumstoffen auftreten und können durch Alterungsprozesse, besonders Photooxidation, verstärkt werden.

In EP-A 1 428 847 wird ein Verfahren zur Erniedrigung von Formaldehydemissionen aus Polyurethanschaumstoffen durch Zugabe von Aminogruppen aufweisenden Polymeren beschrieben. So wird durch Zusatz von Polyvinylaminen der Formaldehydgehalt gemäß VDA 275 unter die Nachweisgrenze von 0,1 ppm gebracht. Nachteilig bei solchen funktionellen, insbesondere aminofunktionellen Zusätzen kann deren Einfluss auf die Aktivität des Rohstoffgemisches sein. Oft werden hierdurch Eigenschaften wie das Fliessverhalten oder aber auch die Offenzelligkeit berührt.

Aufgabe der vorliegenden Erfmdung war es daher, ein Verfahren zur Herstellung von Polyurethanschaumstoffen zu entwickeln, welches zu Polyurethanschaumstoffen mit erniedrigter Formaldehydemission führt und wobei die Aktivität des Rohstoffgemisches nicht wesentlich beeinflusst wird und wobei die mechanischen Eigenschaften des resultierenden Schaumstoffes (insbesondere Druckverformungsrest und Feuchtalterungsverhalten) nicht negativ beeinflusst werden. In einer weiteren Ausführungsform der Erfindung sollen die resultierenden Schaumstoffe darüber hinaus ein niedriges Migrations- und Emissionsverhalten bezüglich der eingesetzten Aktivatoren und Additive aufweisen.

Es wurde nun überraschend gefunden, dass die oben genannte technische Aufgabe durch ein Herstellverfahren, in dem Verbindungen mit mindestens einer Carbonamidgruppe und mindestens einer Nitrilgruppe eingesetzt werden, gelöst wird.

Gegenstand der vorliegenden Erfindung ist ein Verfahren zur Herstellung von Polyurethanschaumstoffen mit erniedrigter Formaldehydemission aus

A1 gegenüber Isocyanaten reaktionsfähigen Wasserstoffatomen aufweisenden Verbindungen mit einem Molekulargewicht von 400 - 15.000,
A2 gegebenenfalls gegenüber Isocyanaten reaktionsfähigen Wasserstoffatomen aufweisenden Verbindungen mit einem Molekulargewicht von 62 - 399,
A3 Wasser und/oder physikalischen Treibmittel,
A4 ggf. Hilfs- und Zusatzstoffe wie

a) Katalysatoren,
b) oberflächenaktive Zusatzstoffe,
c) Pigmente oder Flammschutzmittel,

A5 Verbindungen mit mindestens einer Carbonamidgruppe und mindestens einer Nitrilgruppe, und
B Di- oder Polyisocyanaten.

Die Einsatzmenge der erfindungsgemäßen Komponente A5 bezogen auf 100 Gew.-Teile der Komponenten A1 bis A4 beträgt 0,1 - 10 Gew.-Teile, bevorzugt 0,2 - 5 Gew.-Teile.

Gegenstand der vorliegenden Erfindung ist insbesondere ein Verfahren zur Herstellung von Polyurethanschaumstoffen mit erniedrigter Formaldehydemission aus

Komponente A:

A1 75 bis 99,5 Gew.-Teile, bevorzugt 89 bis 97,7 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 400 - 15.000,
A2 0 bis 10 Gew.-Teile, bevorzugt 0,1 bis 2 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 62 - 399,
A3 0,5 bis 25 Gew.-Teile, bevorzugt 2 bis 5 Gew.-Teile (bezogen auf die Summe der Gew.-Teile der Komponenten A1 bis A4) Wasser und/oder physikalische Treibmittel,
A4 0 bis 10 Gew.-Teile, bevorzugt 0,2 bis 4 Gew.-Teile (bezogen auf die Summe der Gew.-Teile der Komponenten A1 bis A4) Hilfs- und Zusatzstoffe wie

d) Katalysatoren,
e) oberflächenaktive Zusatzstoffe,

f) Pigmente oder Flammschutzmittel,

A5 0,1 - 10 Gew.-Teile, bevorzugt 0,2 - 5 Gew.-Teile (bezogen auf die Summe der Gew.-Teile der Komponenten A1 bis A4) Verbindungen mit mindestens einer Carbonamidgruppe und mindestens einer Nitrilgruppe, und

Komponente B:

B Di- oder Polyisocyanaten,

wobei die Herstellung bei einer Kennzahl von 50 bis 250, bevorzugt 70 bis 130, besonders bevorzugt 75 bis 115 erfolgt, und
wobei alle Gewichtsteilangaben der Komponenten A1 bis A4 in der vorliegenden Anmeldung so normiert sind, dass die Summe der Gewichtsteile der Komponenten A1+A2+A3+A4 in der Zusammensetzung 100 ergibt.

Es wurde gefunden, dass Verbindungen mit mindestens einer Carbonamidgruppe und mindestens einer Nitrilgruppe (Komponente A5) überraschenderweise als Formaldehydfänger wirken. Ein weiterer Gegenstand der Erfmdung ist daher die Verwendung der Verbindungen mit mindestens einer Carbonamidgruppe und mindestens einer Nitrilgruppe (Komponente A5) in Polyurethanzusammensetzungen oder in Verfahren zur Herstellung von Polyurethanschaumstoffen zur Erniedrigung der Formaldehydemission.

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Es handelt sich dabei vorwiegend um Urethan- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis können die nachfolgend näher beschriebenen Komponenten eingesetzt werden.

Komponente A1

Ausgangskomponenten gemäß Komponente A1 sind Verbindungen mit mindestens zwei gegenüber Isocyanten reaktionsfähigen Wasserstoffatomen von einem Molekulargewicht in der Regel von 400 - 15.000. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Die mindestens zwei Hydroxylgruppen aufweisenden Polyether sind erfindungsgemäß bevorzugt.

Komponente A2

Gegebenenfalls werden als Komponente A2 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A2 Ethanolamin, Diethanolamin, Triethanolamin, Sorbit und/oder Glycerin eingesetzt werden. Weitere Beispiele für Verbindungen gemäß Komponente A2 werden in EP-A 0 007 502, Seiten 16 - 17, beschrieben.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A4

Als Komponente A4 werden gegebenenfalls Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesodere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt

α) Harnstoff, Derivate des Harnstoffs und/oder
β) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

Komponente A5

Als Verbindungen mit mindestens einer Carbonamidgruppe und mindestens einer Nitrilgruppe (Komponente A5) seien beispielhaft die Verbindungen gemäß Formeln (I) bis (IV) aufgeführt

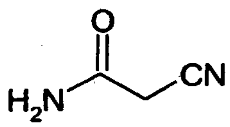

(I)

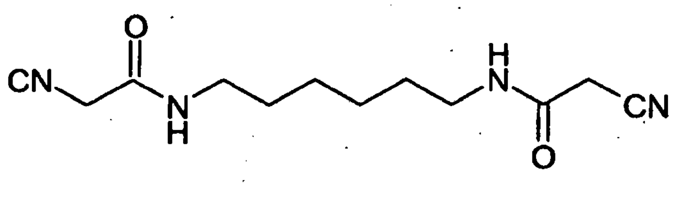

(II)

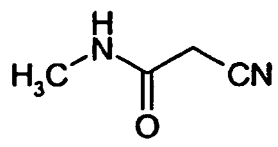

(III)

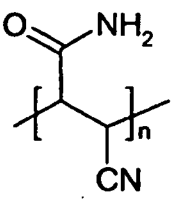

(IV)

Komponente B

Als Komponente B werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (V)

$$Q(NCO)_n \qquad (V)$$

in der
n = 2 - 4, vorzugsweise 2 -3,
und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Durchführung des Verfahrens zur Herstellung von Polyurethanschaumstoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die PUR-Schaumstoffe können als Form- oder auch als Blockschaumstoffe hergestellt werden.

Die Formschaumstoffe können heiß- oder auch kalthärtend hergestellt werden.

Gegenstand der Erfindung sind daher ein Verfahren zur Herstellung der Polyurethanschaumstoffe, die nach diesem Verfahren hergestellten Polyurethanschaumstoffe und deren Verwendung zur Herstellung von Formteilen sowie die Formteile selbst.

Die nach der Erfindung erhältlichen Polyurethanschaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen.

## Beispiele

Beschreibung der Rohstoffe

Komponente A1-1:

Polyetherpolyol der OH-Zahl 28, hergestellt durch Addition von Propylenoxid und Ethylenoxid im Verhältnis 86,2 zu 13,8 % unter Verwendung von Glycerin als Starter mit mindestens 80 % primären OH-Gruppen.

Komponente A1-2:

Polyetherpolyol der OH-Zahl 37, hergestellt durch Addition von Ethylenoxid und Propylenoxid im Verhältnis von 72,5 % und 27,5 % unter Verwendung von Glycerin als Starter mit mindestens 80 % primären OH-Gruppen.

Komponente A2-1: Diethanolamin

Komponente A3-1: Wasser

Komponente A4:

Komponente A4-1:

Stabilisator Tegostab® B 8734 LF (Degussa-Goldschmidt).

Komponente A4-2:

Aktivator Jeffcat® ZR 50 (Huntsman); ein Amin enthaltend eine funktionelle Gruppe, die mit dem Isocyanat chemisch reagiert.

Komponente A4-3:

Aktivator Dabco® NE 300 (Air Products); enthält ein Harnstoff-Derivat.

Komponente A5-1:

Cyanessigsäureamid

Komponente B-1

Isocyanatgemisch (aus der MDI-Reihe) enthaltend 57 Gew.-% 4,4'-Diphenylmethandiisocyanat, 25 Gew.-% 2,4'-Diphenylmethandiisocyanat und 18 Gew.-% Polyphenylpolymethylenpolyisocyanat ("Mehrkern-MDI").

Herstellung der Formteile

Unter den für die Herstellung von PUR-Schaumstoffen üblichen Verarbeitungsbedingungen der Rohstoffvermischung bei Raumtemperatur über einen Hochdruckmischkopf werden gemäß Rezepturaufbau die Ausgangskomponenten in eine auf 60°C geheizte Form des Volumens 12,5 L eingebracht und nach 4 min. entformt. Die Einsatzmenge der Rohstoffe wurde so gewählt, dass eine berechnete Formteildichte von 55 kg/m3 resultiert. In der Tabelle 1 angegeben ist die tatsächlich erhaltene Formteildichte, welche durch Wiegen des Stauchhärte-Prüfkörpers bestimmt wurde.

Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (VI)$$

Die Stauchhärte wurde bestimmt gemäß DIN EN ISO 3386-1-98.

Die Druckverformungsreste DVR 50% und DVR 75% wurden bestimmt gemäß DIN EN ISO 1856-2001-03 bei 50% bzw. 75% Verformung.

Die Formaldehydemission wurde in Anlehnung an die BMW Methode AA-C291 durchgeführt, wobei abweichend von dieser Methode (a) eckige Glasflaschen an Stelle von runden Polyethylenflaschen eingesetzt wurden, (b) der verwendete Prüfkörper eine Dicke von 1 cm (an Stelle von 4 mm) aufwies, (c) ein Kalibrierstandard der Firma Cerilliant eingesetzt wurde und (d) der Feuchtegehalt der Probe nicht ermittelt wurde.

Der Druckverformungsrest bei 70% Verformung nach Feuchtwärmelagerung, (FWL) d.h. 22 Stunden bei 40°C und 95% rel. Feuchte (DVR 70% nach FWL) wurde gemäß DIN EN ISO 1856-2001-03 bestimmt.

Tabelle 1: Zusammensetzungen und Eigenschaften der resultierenden Formteile

| Komponenten [Gew.-Teile] | 1 (Vergleich) | 2 | 3 (Vergleich) |
|---|---|---|---|
| A. Polyolformulierung | | | |
| A1-1 | 97,0 | 97,0 | 97,0 |
| A1-2 | 3,0 | 3,0 | 3,0 |
| A2-1 (Diethanolamin) | 1,2 | 1,2 | 1,2 |
| A3-1 (Wasser) | 3,5 | 3,5 | 3,5 |
| A4-1 | 0,9 | 0,9 | 0,9 |
| A4-2 | 0,4 | 0,4 | 0,4 |
| A4-3 | 0,1 | 0,1 | 0,1 |
| A5-1 | - | 1,0 | 30 |
| B. Isocyanat | | | |
| B-1 bezogen auf 100 Gew.-Teile Polyolformulierung [Gew.-Teile] | 55,0 | 54,5 | 39,25 |
| Index | 95 | 95 | 95 |
| **Eigenschaften** | | | |
| Rohdichte [kg/$m^3$] | 55,0 | 55,0 | 59,5 |
| Formaldehydemission (in Anlehnung an BMW-Test gemäß AA-C291) [ppm] | 2,4 | < 0,1 | n.g. |
| Stauchhärte [kPa] | 9,5 | 9,5 | 9,4 |
| DVR 50% [%] | 7,4 | 6,3 | 17,7 |
| DVR 75% [%] | 8,6 | 7,9 | 31,0 |
| DVR 70% nach FWL [%] | 17,3 | 16,1 | 28,6 |
| n.g. = nicht gemessen | | | |

Der ermittelte Wert an Formaldehydemission (ermittelt in Anlehnung an den BMW-Test zur Bestimmung der Emission von Aldehyden aus polymeren Werkstoffen und Formteilen mittels HPLC AA-C291) wird durch die erfindungsgemäße Verbindung nach Beispiel 2 unter die Nachweisgrenze von 0,1 ppm erniedrigt, während der Vergleich in Beispiel 1 eine Formaldehydemission von 2,4 ppm aufweist.

Zwar wird Cyanessigsäureamid in EP-A 0 358 021 neben Oxalsäureamid und Hydrazodicarbonamid als Flammschutzmittel genannt, wirksam als Formaldehyd-Fänger ist von diesen Verbindungen jedoch nur Cyanessigsäureamid. Gegenüber EP-A 0 358 021 (siehe hierzu Vergleichsbeispiel 3) kann die Einsatzmenge gemäß der vorliegenden Erfindung deutlich reduziert werden, siehe Beispiel 2. Hinweise auf die jetzt gefundene Wirksamkeit von Cyanessigsäureamid als Formaldehyd-Fänger wird in EP-A 0 358 021 weder offenbart noch nahe gelegt. Vorteilhaft wirkt sich die geringere Einsatzmenge an Cyanessigsäureamid insbesondere auf die Schaumstoff-Feuchtalterung aus.

Vergleichsbeispiel 3 unterscheidet sich von der Zusammensetzung gemäß Beispiel 2 lediglich in der Menge an Cyanessigsäureamid (30 Gew.-Teile an Stelle von 1 Gew.-Teil, jeweils bezogen auf 100 Gew.-Teile der Summe der Komponenten A1 bis A4)). Der entsprechend resultierende Weichschaumstoff gemäß Vergleichsbeispiel 3 weist ein

insgesamt niedrigeres mechanisches Eigenschaftsniveau auf: Im Gegensatz dazu weist das erfindungsgemäße Beispiel 2 (enthaltend 1 Gew-Teil Cyanessigsäureamid bezogen auf 100 Gew.-Teile der Summe der Komponenten A1 bis A4) eine Verringerung der Formaldehydemission unter die Nachweisgrenze von 0,1 ppm und ein nahezu unverändertes Druckverformungs- und Feuchtalterungsverhalten auf, d.h. die mechanischen Eigenschaften des Weichschaumstoffes sind auf vergleichbaren Niveau wie die des Vergleichsversuchs 1 (ohne Cyanessigsäureamid).

**Patentansprüche**

**1.** Verfahren zur Herstellung von Polyurethanschaumstoffen mit erniedrigter Formaldehydemission aus

A1 gegenüber Isocyanaten reaktionsfähigen Wasserstoffatomen aufweisenden Verbindungen mit einem Molekulargewicht von 400 - 15.000,
A2 gegebenenfalls gegenüber Isocyanaten reaktionsfähigen Wasserstoffatomen aufweisenden Verbindungen mit einem Molekulargewicht von 62 - 399,
A3 Wasser und/oder physikalischen Treibmitteln,
A4 ggf. Hilfs- und Zusatzstoffe,
A5 Verbindungen mit mindestens einer Carbonamidgruppe und mindestens einer Nitrilgruppe, und
B Di- oder Polyisocyanaten,
wobei die Einsatzmenge der Komponente A5 bezogen auf 100 Gew.-Teile der Komponenten A1 bis A4 0,1-10 Gew.-Teile beträgt, und
wobei als Komponente A5 mindestens eine der Verbindungen gemäß Formeln (1) bis (IV)

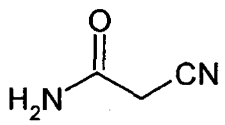
(I)

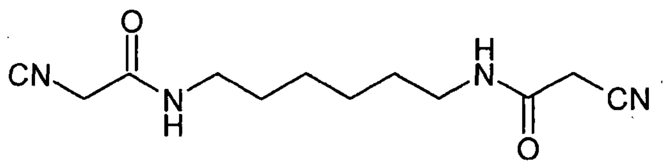
(II)

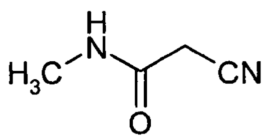
(III)

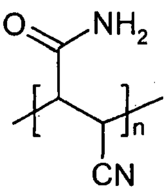
(IV)

eingesetzt werden.

**2.** Verfahren gemäß Anspruch 1 zur Herstellung von Polyurethanschaumstoffen mit erniedrigter Formaldehydemission aus
Komponente A enthaltend

A1 75 bis 99,5 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 400-15.000,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einem Molekulargewicht von 62 - 399,
A3 0,5 bis 25 Gew.-Teile (bezogen auf die Summe der Gew.-Teile der Komponenten A1 bis A4) Wasser und/oder physikalische Treibmittel,
A4 0 bis 10 Gew.-Teile (bezogen auf die Summe der Gew.-Teile der Komponenten A1 bis A4) Hilfs- und Zusatzstoffe
A5 0,1 - 10 Gew.-Teile (bezogen auf die Summe der Gew.-Teile der Komponenten A1 bis A4) Verbindungen mit mindestens einer Carbonamidgruppe und mindestens einer Nitrilgruppe, und

Komponente B enthaltend Di- oder Polyisocyanaten,
wobei die Herstellung bei einer Kennzahl von 50 bis 250 erfolgt.

**3.** Verfahren gemäß einem der Ansprüche 1 oder 2, wobei als Hilfs- und Zusatzstoffe (Komponente A4)

a) Katalysatoren,
b) oberflächenaktive Zusatzstoffe (Tenside), und
c) Additive wie Reaktionsverzögerer, Zellregler, Pigmente, Farbstoffe, Flammschutzmittel, Stabilisatoren gegen Alterungs- und Witterungseinflüsse, Weichmacher, fungistatisch und bakteriostatisch wirkende Substanzen, Füllstoffe und Trennmittel eingesetzt werden.

**4.** Verfahren gemäß einem der Ansprüche 1 bis 3, wobei als Katalysatoren

a) Harnstoff, Derivate des Harnstoffs und/oder
b) sowie aliphatische tertiäre Amine, cycloaliphatische tertiäre Amine, aliphatische Aminoether, cycloaliphatische Aminoether, **dadurch gekennzeichnet, dass** die Amine und Aminoether eine funktionelle Gruppe enthalten, die mit dem Isocyanat chemisch reagiert, eingesetzt werden.

**5.** Verwendung der Verbindungen mit mindestens einer Carbonamidgruppe und mindestens einer Nitrilgruppe (Komponente A5) in Polyurethanzusammensetzungen oder in Verfahren zur Herstellung von Polyurethanschaumstoffen zur Erniedrigung der Formaldehydemission. wobei als Komponente A5 mindestens eine der Verbindungen gemäß Formeln (I) bis (IV)

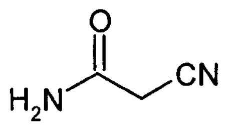

(I)

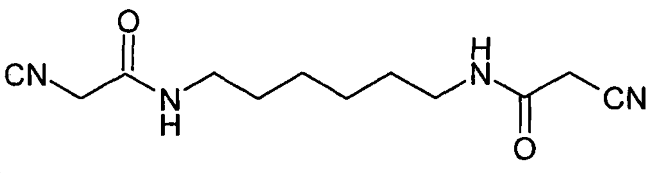

(II)

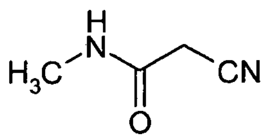

(III)

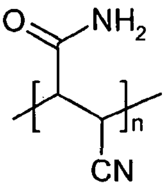

(IV)

eingesetzt werden.

## Claims

**1.** A process for producing polyurethane foams with lowered emission of formaldehyde from

A1 compounds having a molecular weight in the range of from 400 to 15,000 and which contain hydrogen atoms that are reactive towards isocyanates;
A2 optionally, compounds having a molecular weight in the range of from 62 to 399 and which contain hydrogen atoms that are reactive towards isocyanates;
A3 water and/or physical blowing agents;
A4 optionally, auxiliary substances and additives;
A5 compounds which contain at least one carbonamide group and at least one nitrile group; and
B diisocyanates or polyisocyanates,

wherein from 0.1 to 10 parts by weight of component A5, relative to 100 parts by weight of components A1 to A4, is used, and
wherein at least one of the compounds according to formulae (I) to (IV)

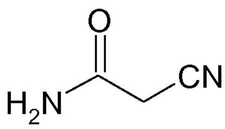

(I)

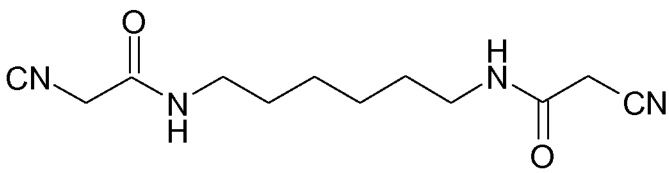

(II)

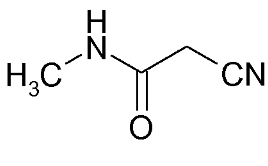

(III)

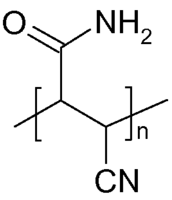

(IV)

is used as component A5.

2. The process of claim 1 for producing polyurethane foams with lowered emission of formaldehyde from component A comprising

A1 75 to 99.5 parts by weight (relative to the sum of the parts by weight of components A1 to A4) of compounds with a molecular weight of 400 - 15 000 exhibiting hydrogen atoms that are reactive towards isocyanates,
A2 0 to 10 parts by weight (relative to the sum of the parts by weight of components A1 to A4) of compounds with a molecular weight of 62 - 399 exhibiting hydrogen atoms that are reactive towards isocyanates,
A3 0.5 to 25 parts by weight (relative to the sum of the parts by weight of components A1 to A4) of water and/or physical blowing agents,
A4 0 to 10 parts by weight (relative to the sum of the parts by weight of components A1 to A4) of auxiliary substances and additives,
A5 0.1 - 10 parts by weight (relative to the sum of the parts by weight of components A1 to A4) of compounds with at least one carbonamide group and at least one nitrile group, and

component B comprising di- or polyisocyanates, wherein production takes place with an index from 50 to 250.

3. The process of either of claims 1 and 2, wherein the auxiliary substances and additives (component A4) comprise

a) catalysts;
b) surface-active additives (surfactants); and
c) additives such as reaction-retarders, cell-regulators, pigments, dyestuffs, flameproofing agents, stabilisers for countering effects of ageing and weathering, plasticisers, substances acting fungistatically and bacteriostatically, fillers, and release agents.

4. The process of any of claims 1 to 3, wherein said catalysts comprise

a) urea, derivatives of urea; and/or
b) and also aliphatic tertiary amines, cycloaliphatic tertiary amines, aliphatic amino ethers, cycloaliphatic amino ethers, wherein said amines and amino ethers contain a functional group that reacts chemically with said isocyanate.

5. Use of compounds which contain at least one carbonamide group and at least one nitrile group (component A5) in polyurethane compositions or in processes for producing polyurethane foams for lowering the emission of formaldehyde, wherein at least one of the compounds according to formulae (I) to (IV)

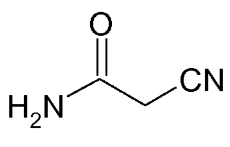

(I)

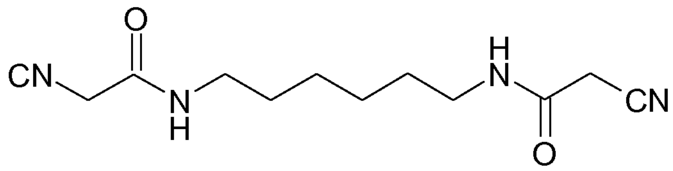

(II)

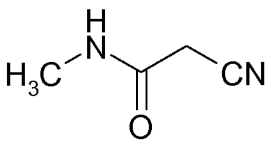

(III)

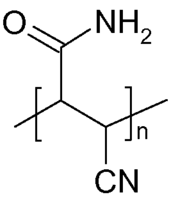

(IV)

is used as component A5.

**Revendications**

**1.** Procédé pour la production de mousses de polyuréthane à émission réduite de formaldéhyde, à partir

A1 de composés comportant des atomes d'hydrogène réactifs vis-à-vis d'isocyanates, ayant une masse moléculaire de 400 - 15 000,
A2 éventuellement de composés comportant des atomes d'hydrogène réactifs vis-à-vis d'isocyanates, ayant une masse moléculaire de 62 - 399,
A3 d'eau et/ou d'agents porogènes physiques,
A4 éventuellement d'adjuvants et additifs,
A5 de composés comportant au moins un groupe carbamoyle et au moins un groupe nitrile, et
B de di- ou polyisocyanates,

la quantité utilisée du composant A5 par rapport à 100 parties en poids des composants A1 à A4 valant de 0,1 à 10 parties en poids, et
en tant que composant A5 étant utilisé au moins l'un des composés selon les formules (I) à (IV)

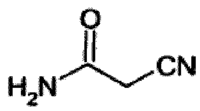

(I)

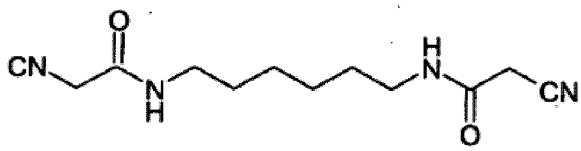

(II)

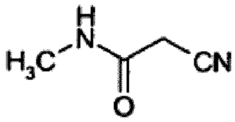

(III)

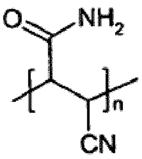

(IV)

**2.** Procédé selon la revendication 1 pour la production de mousses de polyuréthane à émission réduite de formaldéhyde, à partir d'un composant A contenant

A1 75 à 99,5 parties en poids (par rapport à la somme des parties en poids des composants A1 à A4) de composés comportant des atomes d'hydrogène réactifs vis-à-vis d'isocyanates, ayant une masse moléculaire de 400 - 15 000,
A2 0 à 10 parties en poids (par rapport à la somme des parties en poids des composants A1 à A4) de composés comportant des atomes d'hydrogène réactifs vis-à-vis d'isocyanates, ayant une masse moléculaire de 62 - 399,
A3 0,5 à 25 parties en poids (par rapport à la somme des parties en poids des composants A1 à A4) d'eau et/ou d'agents porogènes physiques,
A4 0 à 10 parties en poids (par rapport à la somme des parties en poids des composants A1 à A4) d'adjuvants et additifs,
A5 0,1 à 10 parties en poids (par rapport à la somme des parties en poids des composants A1 à A4) de composés comportant au moins un groupe carbamoyle

et au moins un groupe nitrile, et d'un composant B contenant des di- ou polyisocyanates, la production s'effectuant à un indice de 50 à 250.

**3.** Procédé selon l'une quelconque des revendications 1 et 2, dans lequel on utilise comme adjuvants et additifs (composant A4)

a) des catalyseurs,
b) des additifs agents de surface (tensioactifs), et
c) des additifs tels que des ralentisseurs de réaction, des régulateurs de cellules, des pigments, des colorants, des agents ignifuges, des stabilisants vis-à-vis des effets du vieillissement et des agents atmosphériques, des plastifiants, des substances à action fongistatique et bactériostatique, des charges et des agents de démoulage.

**4.** Procédé selon l'une quelconque des revendications 1 à 3, dans lequel on utilise comme catalyseurs

a) l'urée, des dérivés de l'urée et/ou
b) également des amines aliphatiques tertiaires, des amines cycloaliphatiques tertiaires, des aminoéthers aliphatiques, des aminoéthers cycloaliphatiques, **caractérisé en ce que** les amines et aminoéthers contiennent un groupe réactif qui réagit chimiquement avec l'isocyanate.

5. Utilisation des composés comportant au moins un groupe carbamoyle et au moins un groupe nitrile (composant A5) dans des compositions de polyuréthane ou dans des procédés pour la production de mousses de polyuréthane, pour la réduction de l'émission de formaldéhyde, en tant que composant A5 étant utilisé au moins l'un des composés selon les formules (I) à (IV)

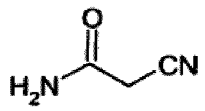

(I)

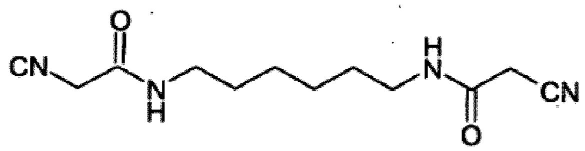

(II)

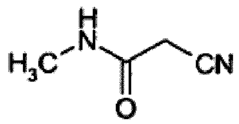

(III)

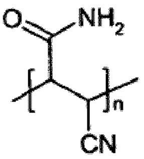

(IV)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1428847 A
- DE 1694142 A
- DE 1694215 A
- DE 1720768 A
- EP 0007502 A
- EP 0000389 A
- EP 0176013 A
- EP 355000 A
- EP 0358021 A


### In der Beschreibung aufgeführte Nicht-Patentliteratur


- Kunststoff-Handbuch Band VII, Polyurethane. Carl Hanser Verlag, 1966, vol. XII
- Neuauflage dieses Buches. Carl Hanser Verlag, 1993
- Kunststoff-Handbuch. Carl-Hanser-Verlag, 1993, vol. VII, 104-127
- **W. SIEFKEN.** *Justus Liebigs Annalen der Chemie,* vol. 562, 75-136
- Kunststoff-Handbuch. Carl-Hanser-Verlag, 1993, vol. VII, 139-265